# EUROPEAN PATENT APPLICATION

(11) **EP 4 832 187 A1**
(43) Date of publication of application: **28.10.2026**
(21) Application number: 24907259.6
(22) Date of filing: 10.12.2024
(51) Int. Cl.: H01M 50/204, H01M 10/613, H01M 10/6235, H01M 10/625, H01M 10/627, H01M 10/643, H01M 10/6556, H01M 10/6563, H01M 50/213, H01M 50/284, H01M 50/289, H01M 50/291, H01M 50/505, H01M 50/548, H01M 50/588, H01M 50/59, H01M 50/595

(54) **POWER SUPPLY DEVICE AND MANUFACTURING METHOD THEREFOR**

(30) Priority: 22.12.2023 JP 2023217215
(71) Applicant: Panasonic Intellectual Property Management Co., Ltd., Kadoma-shi, Osaka 571-0057 (JP)
(72) Inventor: KANKAKU, Mai, Osaka 571-0057 (JP); KAWAKAMI, Satoshi, Osaka 571-0057 (JP)
(74) Representative: Eisenführ Speiser
(86) International application number: PCT/JP2024/043703
(87) International publication number: WO 2025/134874

(57) **Abstract**

A power supply device includes one or more battery blocks that house a plurality of secondary battery cells, and an exterior case that houses the battery block. The battery block includes an intermediate holder that holds a cell intermediate region between end regions of each of the plurality of secondary battery cells, while exposing the end regions from both sides, the end regions each extending a predetermined length from a corresponding one of the cell end faces, and a pair of lid holders that are respectively disposed on both sides of the intermediate holder and cover the end regions of each of the plurality of secondary battery cells. A cooling air path through which cooling air flows to the cell intermediate region of each of the plurality of secondary battery cells is defined on an inner surface of the intermediate holder. The exterior case includes an external opening portion that communicates with the cooling air path. The power supply device further comprises end waterproof structures that provide waterproofing around boundaries between the cell intermediate region and the end regions of each of the secondary battery cells.

## Description

### TECHNICAL FIELD

The present disclosure relates to a power supply device and a manufacturing method therefor.

### BACKGROUND ART

A power supply device having a plurality of rechargeable secondary battery cells such as a lithium ion secondary battery connected in series or in parallel and housed in an exterior case is used for driving an electric device such as an electric tool or driving an electric moving body, such as a vehicle or a construction machine (for example, PTL 1). Since the secondary battery cell used in such a power supply device generates heat by charging and discharging, it is necessary to cool the secondary battery cell. For this reason, in order to cool the secondary battery cell by air cooling, while a cooling air flow path for allowing cooling air to flow is formed between the secondary battery cells, an opening is provided in the exterior case and caused to communicate with the cooling flow path.

On the other hand, a power supply device or the like used outdoors is required to have waterproofness. For this reason, it is necessary to prevent occurrence of an unintended short circuit inside due to water ingress from the outside while providing an opening for taking in cooling air from the outside in the exterior case, and a complicated structure has been required in order to implement conflicting characteristics.

### Citation List

### Patent Literature

PTL 1: International Publication Pamphlet No. WO 2017/175487

### SUMMARY OF THE INVENTION

An object of an exemplary embodiment of the present disclosure is to provide a power supply device capable of cooling a secondary battery cell while ensuring waterproof performance of the secondary battery cell, and a manufacturing method therefor. Moreover, an object of another exemplary embodiment is to provide a novel power supply device and manufacturing method therefor. Note that the description of these objects and problems in the present disclosure does not preclude the existence of other objects and problems. Moreover, one aspect of the present disclosure is not required to solve all of these problems. Further, problems other than these problems can be extracted from the description, drawings, and claims of the present disclosure.

A power supply device according to an exemplary embodiment of the present disclosure is a power supply device that includes: a plurality of secondary battery cells each of which includes a cylindrical exterior can, end faces of the cylindrical exterior can defining cell end faces on which electrodes are provided; one or more battery blocks that house the plurality of secondary battery cells; and an exterior case that houses the one or more battery blocks, wherein each of the one or more battery blocks includes an intermediate holder that holds a cell intermediate region between end regions of each of the plurality of secondary battery cells, while exposing the end regions from both sides, the end regions each extending a predetermined length from a corresponding one of the cell end faces, and a pair of lid holders that are respectively disposed on both sides of the intermediate holder and cover the end regions of each of the plurality of secondary battery cells, a cooling air path through which cooling air flows to the cell intermediate region of each of the plurality of secondary battery cells is defined on an inner surface of the intermediate holder, the exterior case includes an external opening portion that communicates with the cooling air path, and the power supply device further comprises end waterproof structures that provide waterproofing around boundaries between the cell intermediate region and the end regions of each of the secondary battery cells.

Moreover, a method for manufacturing a power supply device according to another exemplary embodiment of the present disclosure includes: preparing a plurality of secondary battery cells each of which includes a cylindrical exterior can, end faces of the cylindrical exterior can defining cell end faces on which electrodes are provided, one or more battery blocks, each including an intermediate holder that holds a cell intermediate region between end regions of each of the plurality of secondary battery cells, while exposing the end regions from both sides, the end regions each extending a predetermined length from a corresponding one of the cell end faces, and a pair of lid holders that are respectively disposed on both sides of the intermediate holder and cover the end regions of each of the plurality of secondary battery cells, and an exterior case that houses the one or more battery blocks; closing, while holding the plurality of secondary battery cells with the intermediate holder, each of the end regions, exposed from the intermediate holder, of each of the plurality of secondary battery cells with a first surface of a corresponding one of the lid holders, and fixing the intermediate holder and the lid holders in a state where end waterproof structures provide waterproofing at least around boundaries between the cell intermediate region and the end regions; and housing the one or more battery blocks in the exterior case such that a cooling air path through which cooling air flows to the cell intermediate region of each of the plurality of secondary battery cells is defined on an inner surface of the intermediate holder, and such that the cooling air path communicates with an external opening portion in the exterior case.

According to the power supply device and the manufacturing method therefor according to the exemplary embodiments of the present disclosure, while the cooling air flows in the intermediate holder to air-cool the cell intermediate region of the secondary battery cell, the end region of the secondary battery cell is waterproofed to protect the electrode, and the unintended short circuit and the like can be avoided.

### BRIEF DESCRIPTION OF THE DRAWINGS

Fig. 1 is a perspective view illustrating a power supply device according to a first exemplary embodiment.
Fig. 2 is a perspective view of the power supply device of Fig. 1 as viewed obliquely from below on a rear side.
Fig. 3 is an exploded perspective view in which an upper case of the power supply device of Fig. 1 is disassembled.
Fig. 4 is a further exploded perspective view of the power supply device of Fig. 3.
Fig. 5 is an exploded perspective view of the power supply device of Fig. 2.
Fig. 6 is a cross-sectional view taken along line VI-VI of the power supply device of Fig. 1.
Fig. 7 is an exploded perspective view of a battery module of Fig. 4.
Fig. 8 is an exploded perspective view in which a lead plate is disassembled from one battery block in Fig. 7.
Fig. 9 is an exploded perspective view of one holder case of Fig. 8.
Fig. 10 is a further exploded perspective view of the holder case of Fig. 9.
Fig. 11 is a perspective view illustrating a scene in which an adhesive material is applied to an intermediate holder of Fig. 9.
Fig. 12 is a cross-sectional view taken along line XII-XII of the battery block of Fig. 1.
Fig. 13 is a cross-sectional view taken along line XIII-XIII of the battery block of Fig. 7.
Fig. 14 is an enlarged cross-sectional view of a main part of the battery block of Fig. 13.
Fig. 15 is a cross-sectional perspective view taken along line XV-XV of the power supply device of Fig. 1.
Fig. 16 is a cross-sectional perspective view taken along line XII-XII of the power supply device of Fig. 1.

### DESCRIPTION OF EMBODIMENT

Exemplary embodiments of the present disclosure may also be specified by the following configurations and features.

In any one of the above exemplary embodiments, in a power supply device according to another exemplary embodiment of the present disclosure, each of the pair of lid holders includes insertion recesses on a face facing the intermediate holder, each of the insertion recesses receiving a corresponding end region of a corresponding one of the plurality of secondary battery cells, and electrode windows are formed in respective bottom faces of the insertion recesses, each of the electrode windows exposing a part of a corresponding one of the cell end faces from a corresponding one of the pair of lid holders. With the above configuration, the electrode can be connected while the end region of each secondary battery cell is held by the lid holder.

Moreover, in any one of the above exemplary embodiments, a power supply device according to another exemplary embodiment of the present disclosure further includes a lead plate connected to a corresponding one of the electrodes through a corresponding one of the electrode windows. With the above configuration, it is possible to waterproof the region by the end waterproof structure while securing the region where the lead plate and the electrode are connected.

Further, in any one of the above exemplary embodiments, a power supply device according to another exemplary embodiment of the present disclosure further includes a circuit board electrically connected to the plurality of secondary battery cells via the lead plate. The circuit board is provided with a waterproofing structure.

Furthermore, in any one of the above exemplary embodiments, in a power supply device according to another exemplary embodiment of the present disclosure, the intermediate holder includes a pair of wall portions that constitute main surfaces of the intermediate holder, and a pair of side walls each of which connects between the pair of wall portions, the pair of wall portions define intermediate window portions through which the plurality of secondary battery cells are respectively inserted, and upper and lower sides of the pair of wall portions are open such that the cell intermediate region of each of the plurality of secondary battery cells is directly exposed in the cooling air path. With the above configuration, the intermediate holder has the hollow structure, the cell intermediate region of the secondary battery cell is exposed, and cooling can be efficiently performed.

Furthermore, in any one of the above exemplary embodiments, in a power supply device according to another exemplary embodiment of the present disclosure, fixing structures for fixing the lid holders to the intermediate holder constitute the end waterproof structures.

Furthermore, in any one of the above exemplary embodiments, in a power supply device according to another exemplary embodiment of the present disclosure, each of the end waterproof structures is a waterproof double-sided tape interposed at an interface between the intermediate holder and a corresponding one of the lid holders.

Furthermore, in any one of the above exemplary embodiments, in a power supply device according to another exemplary embodiment of the present disclosure, each of the end waterproof structures is an adhesive layer that bonds the intermediate holder and a corresponding one of the lid holders.

Furthermore, in any one of the above exemplary embodiments, in a power supply device according to another exemplary embodiment of the present disclosure, the one or more battery blocks include a pair of battery blocks arranged adjacent to each other.

Furthermore, in any one of the above exemplary embodiments, in a method for manufacturing a power supply device according to another exemplary embodiment of the present disclosure, the fixing of the intermediate holder and the lid holder includes filling and curing an uncured adhesive material in an interface between the intermediate holder and the lid holder.

Furthermore, in any one of the above exemplary embodiments, in a method for manufacturing a power supply device according to another exemplary embodiment of the present disclosure, the fixing of the intermediate hold and the lid holder includes attaching a waterproof double-sided tape to an interface between the intermediate holder and the lid holder.

Hereinafter, exemplary embodiments of the present disclosure will be described with reference to the drawings. However, the exemplary embodiments to be described below are examples for embodying the technical idea of the present disclosure, and the present disclosure is not limited to the exemplary embodiments described below. Moreover, in the present specification, members indicated in the claims are not limited to the members of the exemplary embodiments. In particular, dimensions, materials, shapes, relative arrangements, and the like of components described in the exemplary embodiments are not intended to limit the scope of the present disclosure exclusively unless otherwise specified, and are merely illustrative examples. Note that sizes and positional relationships of members illustrated in each drawing may be exaggerated to clarify the explanation. Further, in the following description, the same names and reference marks indicate the same or similar members, and detailed description thereof will be omitted as appropriate. Further, each element constituting the present disclosure may include an aspect in which a plurality of elements are constituted by one member and the one member serves as the plurality of elements, or conversely, a function of one member may be shared and implemented by a plurality of members.

The power supply device of the present disclosure can be used as a power source of a portable electric device such as an electric tool or an electric cleaner, as a power source for driving a moving body such as an electric cart, an electric scooter, or a power-assisted bicycle, as a power source for backup of a server or a power supply device for home use, business use, or factory use for stationary power storage, or as a power source for driving a vehicle such as a hybrid vehicle or an electric vehicle. Hereinafter, a power supply device used as a power source for driving an electric tool will be described as an exemplary embodiment of the present invention.

### [First exemplary embodiment]

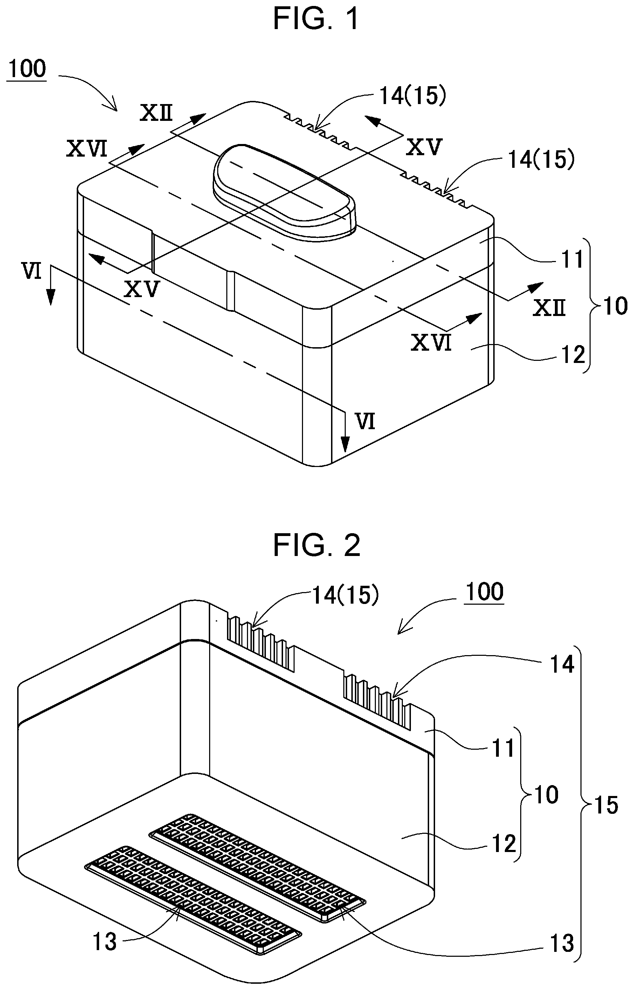

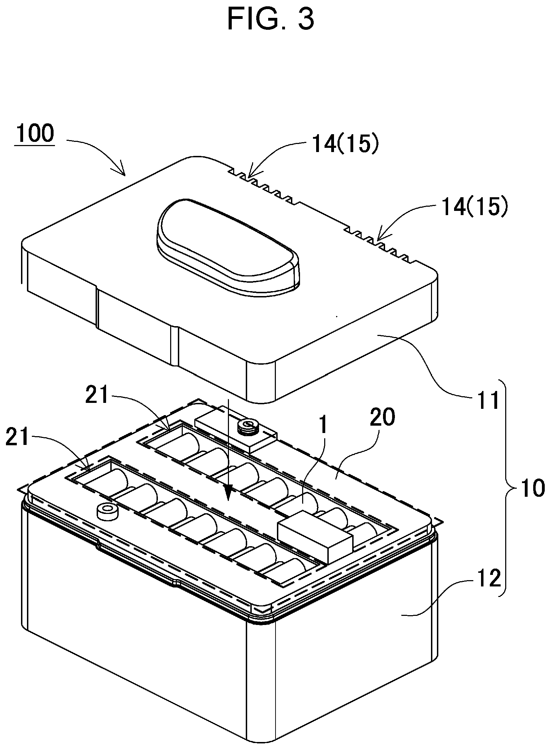

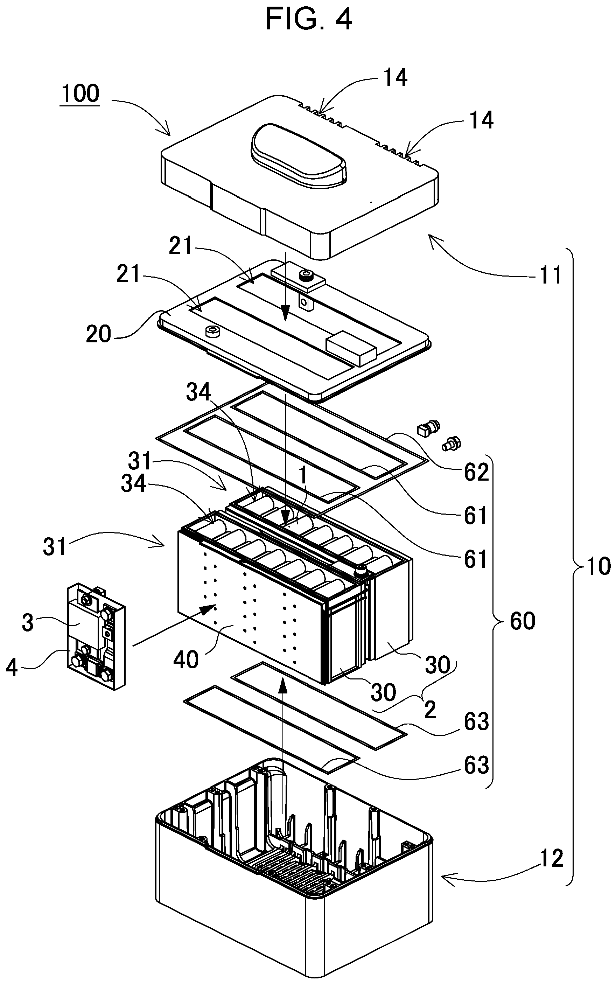

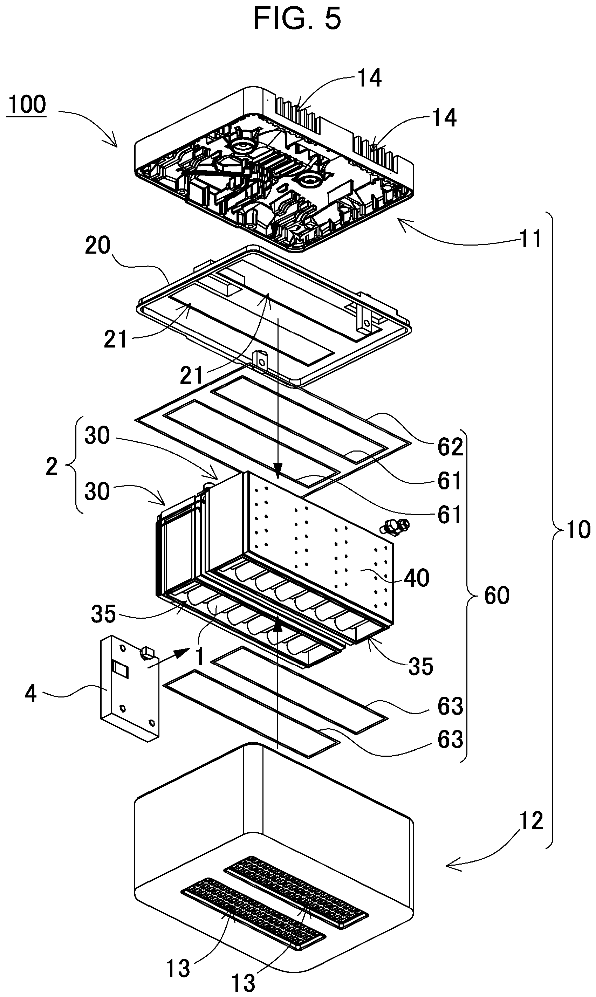

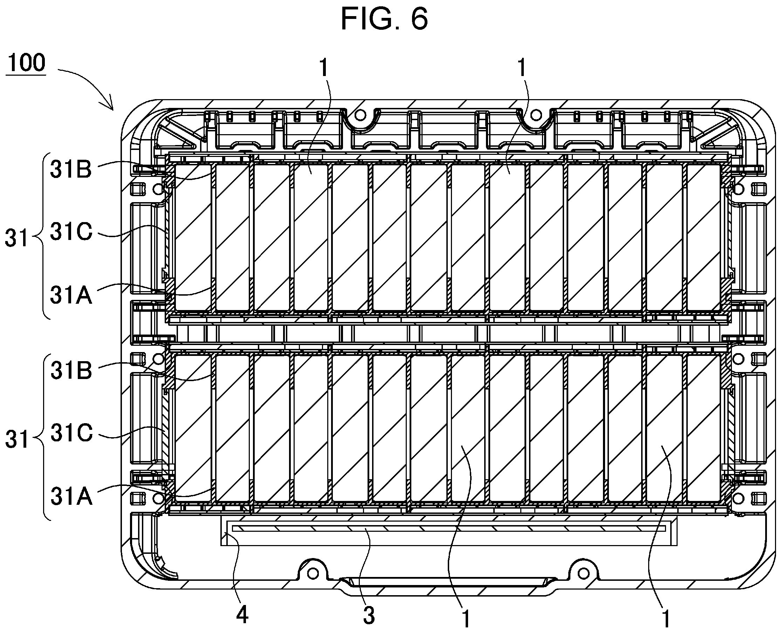

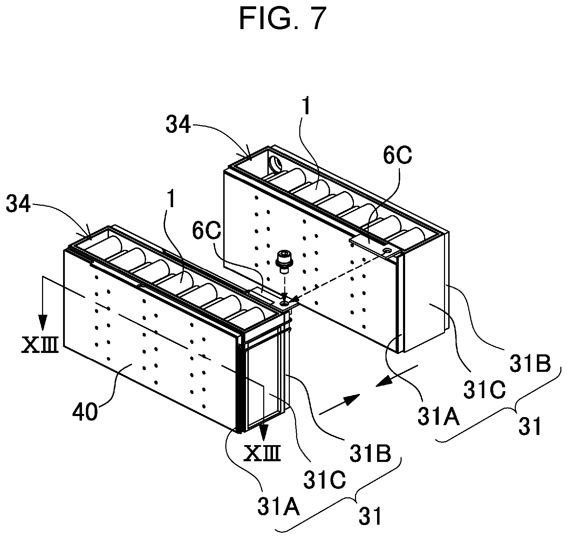

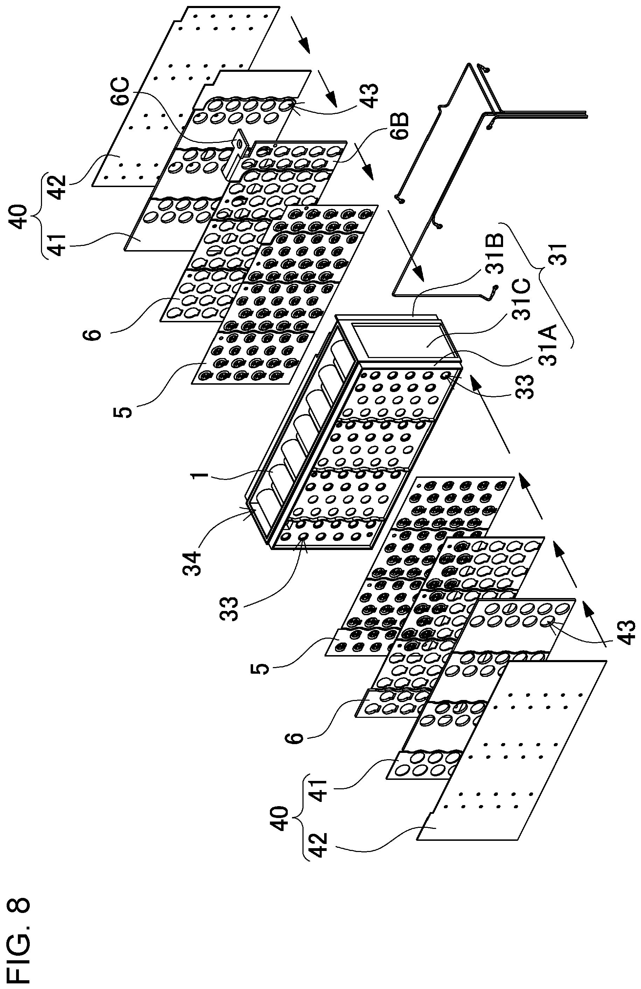

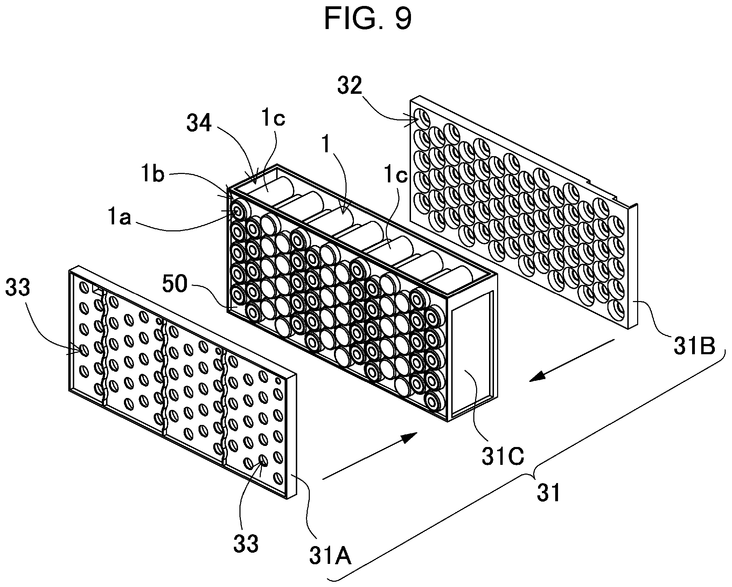

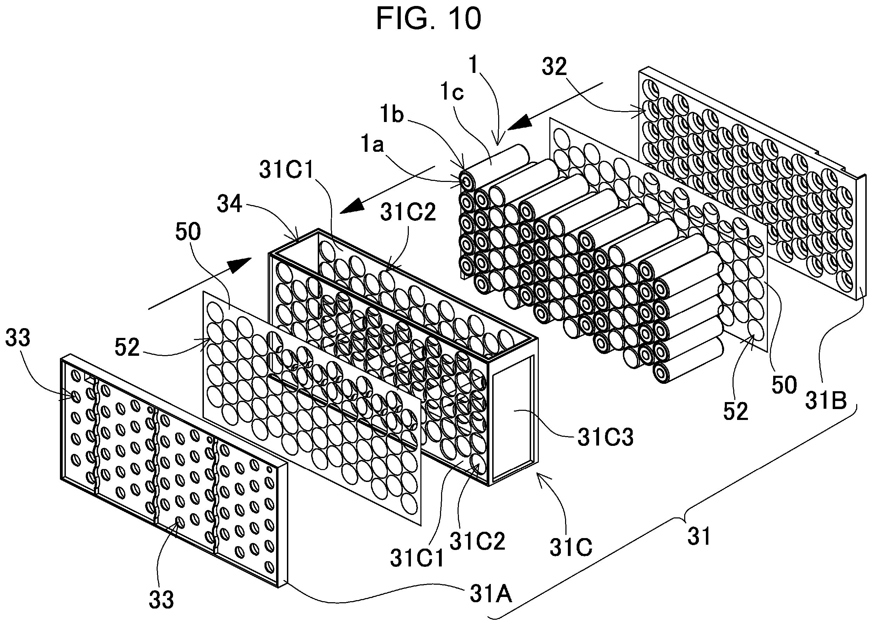

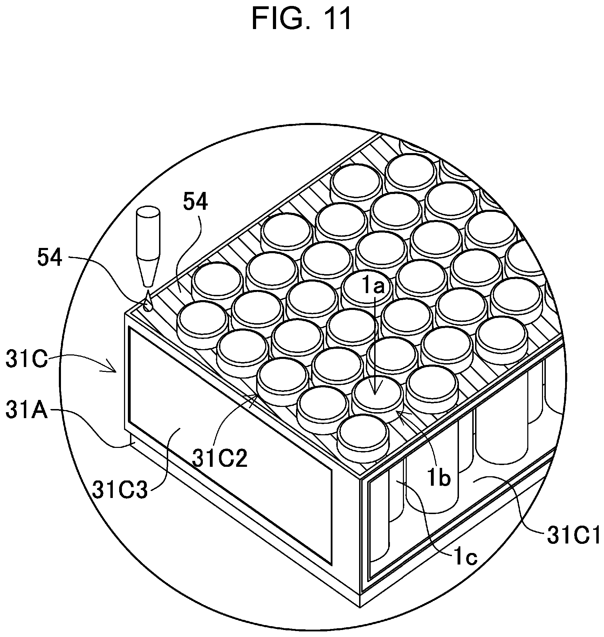

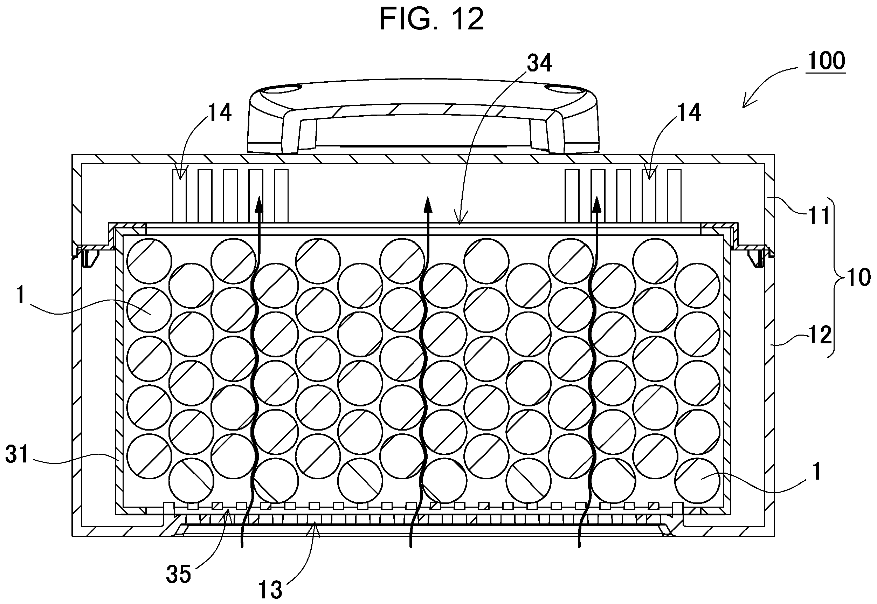

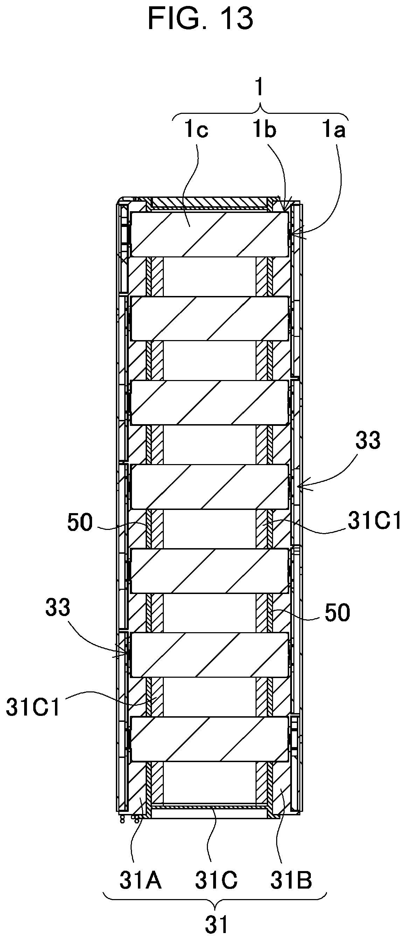

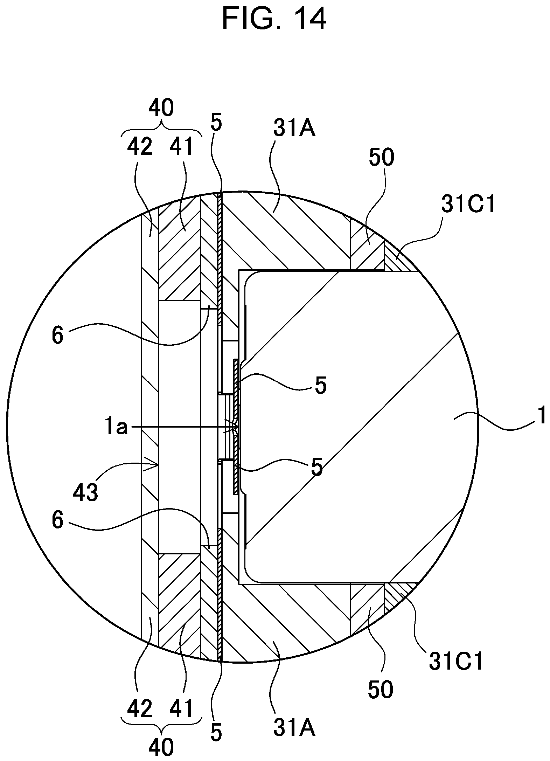

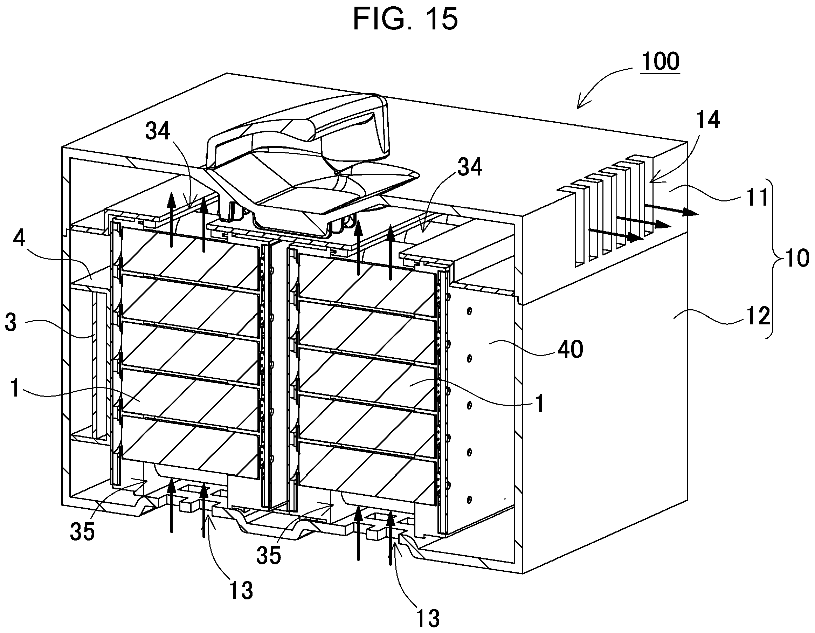

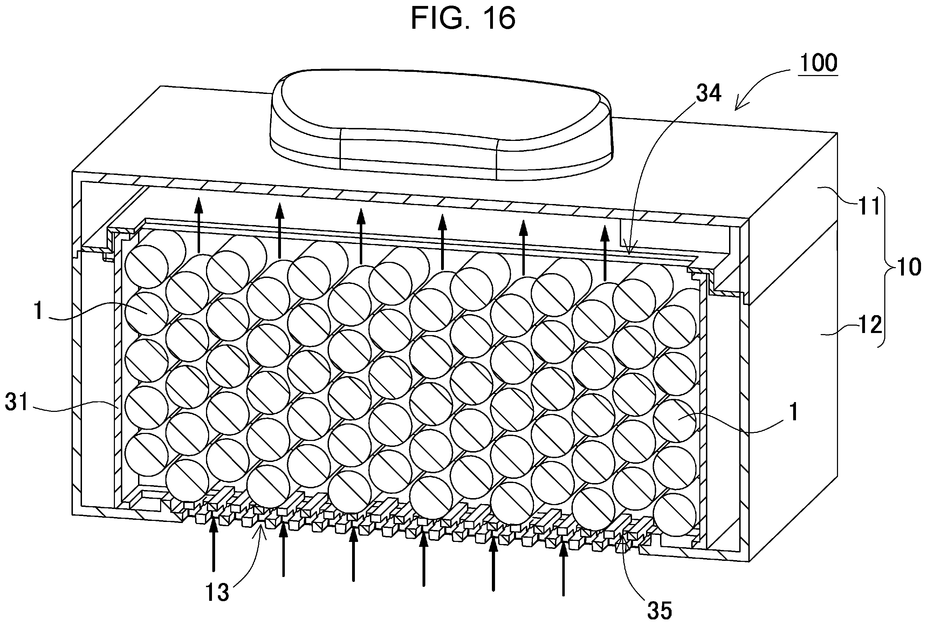

Power supply device 100 according to a first exemplary embodiment of the present disclosure is illustrated in Figs. 1 to 16. In these drawings, Fig. 1 is a perspective view illustrating power supply device 100 according to the first exemplary embodiment, Fig. 2 is a perspective view of power supply device 100 of Fig. 1 as viewed obliquely from below on a rear side, Fig. 3 is an exploded perspective view in which upper case 11 of power supply device 100 of Fig. 1 is disassembled, Fig. 4 is a further exploded perspective view of power supply device 100 of Fig. 3, Fig. 5 is an exploded perspective view of power supply device 100 of Fig. 2, Fig. 6 is a cross-sectional view taken along line VI-VI of power supply device 100 of Fig. 1, Fig. 7 is an exploded perspective view of battery module 2 of Fig. 4, Fig. 8 is an exploded perspective view in which lead plate 5 is disassembled from one battery block 30 of Fig. 7, Fig. 9 is an exploded perspective view of one holder case 31 of Fig. 8, Fig. 10 is a further exploded perspective view of holder case 31 of Fig. 9, Fig. 11 is a perspective view illustrating a scene in which an adhesive material is applied to intermediate holder 31C of Fig. 9, Fig. 12 is a cross-sectional view taken along line XII-XII of battery block 30 of Fig. 1, Fig. 13 is a cross-sectional view taken along line XIII-XIII of battery block 30 of Fig. 7, Fig. 14 is an enlarged cross-sectional view of a main part of battery block 30 of Fig. 13, Fig. 15 is a cross-sectional perspective view taken along line XV-XV of power supply device 100 of Fig. 1, and Fig. 16 is a cross-sectional perspective view taken along line XII-XII of power supply device 100 of Fig. 1, respectively. Power supply device 100 illustrated in these drawings includes exterior case 10, battery module 2, and circuit board 3.

### (Exterior case 10)

Exterior case 10 houses battery module 2 and circuit board 3. As an outer shape of exterior case 10, any shape having a housing space in the inside can be used. In the example illustrated in Figs. 1 to 6, exterior case 10 is formed in a box shape whose appearance is extended in one direction (lateral direction in the drawings). As illustrated in Figs. 3 to 5, box-shaped exterior case 10 includes upper case 11 and lower case 12 obtained by vertically dividing the exterior case into two parts. However, the present disclosure is not limited to this configuration, and the exterior case may be divided into three or more parts. Moreover, the exterior case may be divided into left and right parts.

Exterior case 10 is preferably made of a member having excellent insulation properties, for example, a resin such as polycarbonate, a PC-ABS alloy, and the like. However, the exterior case may be made of a metal member such as aluminum or an alloy thereof. Moreover, an internal space for housing battery module 2 and circuit board 3 is provided inside exterior case 10. In the example illustrated in Figs 5 to 6 and the like, an internal space is formed in lower case 12 to house battery module 2 and circuit board 3. In the internal housing space, a portion in which battery blocks 30 of battery module 2 and circuit board 3 are arranged is waterproofed by battery waterproof portion 60.

### (Partition portion 20)

Moreover, partition portion 20 is arranged on an upper surface of battery module 2. Partition openings 21 are provided in partition portion 20. In the example of Fig. 3, two partition openings 21 are formed in partition portion 20. A part of battery module 2 is exposed from each partition opening 21. As a result, battery module 2 partially communicates with an outside, and cooling air can be introduced into or discharged from battery module 2.

Further, in exterior case 10, external first opening 13 and external second opening 14 are formed in a part thereof. External first opening 13 and external second opening 14 communicate with a cooling air path. In the example illustrated in Figs. 2 and 5, external first opening 13 is opened in a bottom face of exterior case 10, and external second opening 14 is opened on an upper side of a rear surface of exterior case 10 (details will be described later).

Moreover, in order to cool a plurality of secondary battery cells 1 housed in each battery block 30 constituting battery module 2, as illustrated in Figs. 4 to 5, 7 to 10, and the like, holder upper opening portion 34 is opened on an upper surface of holder case 31 constituting each battery block 30, and holder lower opening portion 35 is opened on a lower surface. Holder upper opening portion 34 communicates with external first opening 13 of exterior case 10, and holder lower opening portion 35 communicates with external second opening 14 (details will be described later).

### (Battery module 2)

Battery module 2 is also referred to as a core pack or the like, and houses the plurality of secondary battery cells 1. Moreover, battery module 2 may include a plurality of battery blocks 30, and the plurality of secondary battery cells 1 may be housed in each battery block 30. In the example of Figs. 4, 6, 7, and the like, two battery blocks 30 are stacked to constitute battery module 2.

### (Holder case 31)

Each battery block 30 includes holder case 31, secondary battery cell 1, and lead plate 5. Holder case 31 has a box-shaped outer shape as illustrated in Fig. 8. A holder housing space is formed inside holder case 31, and the plurality of secondary battery cells 1 are housed in the holder housing space. Moreover, holder case 31 illustrated in Fig. 9 and the like is divided into three parts, and joins a pair of lid holders 31A and 31B and intermediate holder 31C interposed therebetween. However, the holder case is not limited to a structure in which the holder case is divided into three parts, and may be divided into four or more parts. A space between the divided holder cases is waterproofed by end waterproof structure 50 (details will be described later). Holder case 31 is made of a material having excellent insulation properties. Preferably, the holder case is made of resin such as polycarbonate or a PC-ABS alloy.

### (Intermediate holder 31C)

Intermediate holder 31C holds cell intermediate region 1c between end regions 1b by exposing end regions 1b at a certain distance from cell end faces 1a of secondary battery cells 1 from both sides. Intermediate holder 31C includes a pair of wall portions 31C1 constituting a main surface and a pair of side walls 31C3 connecting both sides of the pair of wall portions 31C1. In the pair of wall portions 31C1, intermediate window portions 31C2 into which the plurality of secondary battery cells 1 are respectively inserted are opened. Moreover, upper and lower portions of the pair of wall portions 31C1 are opened, and directly exposes cell intermediate region 1c of secondary battery cell 1 held by intermediate holder 31C in the cooling air path. As described above, with intermediate holder 31C having the hollow structure, cell intermediate region 1c of secondary battery cell 1 can be exposed, and cooling can be efficiently performed (details will be described later).

### (Lid holders 31A, 31B)

The pair of lid holders 31A and 31B is arranged on both sides of intermediate holder 31C and closes surfaces on both sides. As a result, end regions 1b of secondary battery cells 1 exposed from both sides of intermediate holder 31C are covered with lid holders 31A and 31B.

### (Insertion recesses 32)

Moreover, in lid holders 31A and 31B, insertion recesses 32 that cover end regions 1b of secondary battery cells 1 are formed on a first surface side facing intermediate holder 31C. In the example illustrated in Figs. 9 to 10 and the like, cylindrical insertion recesses 32 are formed integrally with lid holders 31A and 31B at positions corresponding to end regions 1b of secondary battery cells 1 on the first surface sides of lid holders 31A and 31B.

Moreover, on a bottom face of insertion recess 32, electrode window 33 through which a part of cell end face 1a is exposed from lid holders 31A and 31B in a state where end region 1b of each secondary battery cell 1 is inserted is formed. With such a configuration, electrodes can be connected while end regions 1b of secondary battery cells 1 are held by lid holders 31A and 31B.

### (Lead plate 5)

Moreover, battery block 30 includes lead plate 5 for electrically connecting secondary battery cells 1 to each other. Lead plate 5 is preferably arranged on an outer surface side of holder case 31. Lead plate 5 is electrically connected to terminals of secondary battery cells 1 exposed through electrode windows 33 communicating with insertion recesses 32 opened in lid holders 31A and 31B.

Each lead plate 5 connects electrodes of cell end faces 1a of secondary battery cells 1 to connect the plurality of secondary battery cells 1. Lead plate 5 is made of a metal plate having excellent conductivity, such as an aluminum plate, a nickel plate, or a copper plate. The plurality of secondary battery cells 1 are connected in series or in parallel via lead plates 5. The number of series connections and the number of parallel connections can be arbitrarily set according to required specifications. In the example of Fig. 8 and the like, end faces of 10 secondary battery cells 1 are mainly connected to each lead plate 5, and a total of 70 secondary battery cells 1 are used in one battery block 30 to form 7 series × 10 parallel. Moreover, in the example of Fig. 4, two battery blocks 30 are stacked in a longitudinal direction of secondary battery cells 1, these battery blocks 30 are connected in series, and a total of 140 secondary battery cells 1 are arranged in 14 series × 10 parallel. However, the number and connection form of the secondary battery cells, that is, the number in series and the number in parallel are not limited to this configuration.

### (Bus bar 6)

Moreover, bus bars 6 are used as necessary for connection between lead plates 5. In the example of battery block 30 illustrated in the exploded perspective view of Fig. 8, bus bars 6 are arranged on and connected to surfaces of lead plates 5 to implement 7 series × 10 parallel. Moreover, bus bar 6B positioned at an end exposes connection piece 6C of the total output on the upper surface of holder case 31. In the examples of Figs. 4 and 7, connection pieces 6C of two battery blocks 30 are connected by screwing. By adding not only lead plates 5 but also bus bars 6 in this manner, heat generation can be suppressed even though a current value increases. Note that, although lead plate 5 and bus bar 6 are configured as separate components in the present exemplary embodiment, the bus bar can be omitted by providing a lead plate with a function of the bus bar depending on the current value.

Note that, in this example, an example in which the secondary battery cells are held in a posture in which positive electrodes and negative electrodes alternately appear on cell end faces 1a of stacked secondary battery cells 1 is illustrated. Moreover, preferably, the positive electrodes are arranged not to face each other between adjacent battery blocks 30. With such an arrangement, in a case where a gas release valve that opens when an internal pressure becomes high is provided in cell end face 1a on the positive electrode side of secondary battery cell 1, even though a high-temperature and high-pressure gas is released from one secondary battery cell 1 by any chance, the other secondary battery cell 1 is not arranged on the side facing cell end face 1a, in other words, cell end faces 1a on which the gas release valve is not provided are arranged in a posture facing each other. As a result, safety can be enhanced.

### (Insulating sheet 40)

Further, insulating sheet 40 may be added in order to insulate a region where lead plate 5 and bus bar 6 are exposed in each end face of holder case 31. Insulating sheet 40 may include a plurality of sheets in addition to including a single sheet. In the example of Fig. 8, first insulating sheet 41 and second insulating sheet 42 are stacked as insulating sheet 40 on a surface of bus bar 6. Opening windows 43 in which portions corresponding to cell end faces 1a are opened are formed in first insulating sheet 41 stacked on bus bar 6. On the other hand, second insulating sheet 42 stacked on first insulating sheet 41 closes opening windows 43.

### (Circuit board 3)

Battery block 30 is connected to circuit board 3 via lead plate 5 and bus bar 6. On circuit board 3, a charge and discharge circuit for charging and discharging secondary battery cell 1, a protection circuit for monitoring voltage and temperature of secondary battery cell 1 and stopping current at the time of abnormality, and the like are mounted. Circuit board 3 includes a glass epoxy substrate or the like. Moreover, board holder 4 may be arranged as a member for holding circuit board 3.

### (Secondary battery cells 1)

As illustrated in Figs. 6, 8, 12 to 14 and the like, each battery block 30 houses secondary battery cells 1 in holder case 31. A secondary battery cell having a cylindrical or prismatic outer shape can be used as each secondary battery cell 1. In the examples illustrated in Fig. 6 and the like, cylindrical secondary battery cells 1 are arranged and used in a staggered manner in a horizontal orientation. Note that the number and arrangement of secondary battery cells 1 are not limited to this example, and any number and arrangement can be appropriately adopted. For example, the cylindrical secondary battery cells may be arranged in a matrix. For secondary battery cell 1, a known secondary battery such as a lithium ion secondary battery, a nickel nickel metal hydride battery, or a nickel cadmium battery can be appropriately used.

Each secondary battery cell 1 has positive and negative electrodes. A positive-electrode or negative-electrode terminal is preferably provided on one cell end face 1a of secondary battery cell 1. In the example of Figs. 6 and 8, and the like, the positive-electrode terminal is provided on one cell end face 1a of secondary battery cell 1, and another surface of an exterior can serve as a negative electrode. Moreover, in this example, an example in which the secondary battery cells are held in a posture in which the positive electrodes and the negative electrodes alternately appear on cell end faces 1a of stacked secondary battery cells 1 is illustrated. However, each secondary battery cell may be held by the battery block in a posture in which the positive electrodes or the negative electrodes of all the secondary battery cells are on the same side.

Moreover, the gas release valve is provided on one cell end face 1a of the exterior can of each secondary battery cell 1. The gas release valve is opened in response to an increase in an internal pressure of the exterior can, and releases gas inside the exterior can to the outside. Such a gas release valve is provided, for example, on a positive electrode side of secondary battery cell 1.

### (Holder upper opening portion 34)

Moreover, in each holder case 31, holder upper opening portion 34 and a holder lower opening portion 35 are formed on an upper surface and a lower surface of intermediate holder 31C, respectively. As illustrated in the cross-sectional views of Figs. 12, 15, and 16, the cooling air can be introduced into holder case 31 through holder upper opening portion 34 and holder lower opening portion 35 opened vertically in intermediate holder 31C, and discharged after heat exchange. Moreover, by opening holder upper opening portion 34 and holder lower opening portion 35 on facing surfaces of intermediate holder 31C, respectively, it is possible to allow the cooling air to flow linearly and smoothly.

Each holder upper opening portion 34 and holder lower opening portion 35 are preferably extended in a direction intersecting the longitudinal direction of secondary battery cell 1. As a result, holder upper opening portion 34 and holder lower opening portion 35 are opened in a direction in which secondary battery cells 1 are stacked, and many secondary battery cells 1 are exposed from holder case 31. As a result, heat dissipation performance can be improved.

Moreover, in the example of Fig. 8, holder case 31 is divided into three parts, and holder upper opening portion 34 and holder lower opening portion 35 are opened in intermediate holder 31C in the middle. Upper and lower portions of Intermediate holder 31C are opened to close around a periphery thereof, and facilitates a flow of the cooling air in a vertical direction. Note that a plurality of holder upper opening portions and a plurality of holder lower opening portions may be formed on the upper surface and the lower surface of the intermediate holder, respectively.

Further, holder upper opening portions 34 opened in the upper surface of holder case 31 communicate with partition opening 21 of partition portion 20. Moreover, holder lower opening portion 35 opened in a lower surface of holder case 31 communicates with external second opening 14 of exterior case 10.

### (Cooling air path)

In each battery block 30, the cooling air path through which the cooling air flows is formed between an inner surface of battery block 30 and a surface of cell intermediate region 1c between end regions 1b connected to cell end face 1a in each secondary battery cell 1. The cooling air path is formed inside holder case 31 in a gap between an inner surface of holder case 31 and a surface of secondary battery cell 1 or between adjacent secondary battery cells 1. Moreover, in exterior case 10, external first opening 13 and external second opening 14 communicating with the cooling air path are formed. With such a configuration, the cooling air is taken in from the outside by the cooling air path and directly flows on the surface of secondary battery cell 1. As a result, it is possible to efficiently perform heat exchange and achieve cooling.

In the example illustrated in Figs. 13 to 15 and the like, in holder case 31, cell intermediate region 1c defined from end region 1b including a terminal of each secondary battery cell 1 is exposed. Moreover, in intermediate holder 31C of holder case 31, holder upper opening portion 34 and holder lower opening portion 35 communicating with the cooling air path are opened. Holder upper opening portion 34 communicates with external opening portion 15. Moreover, holder lower opening portion 35 communicates with external second opening 14. With such a configuration, the cooling air flows over a surface of cell intermediate region 1c of secondary battery cell 1, and secondary battery cell 1 can be efficiently cooled.

In exterior case 10, external first opening 13 and external second opening 14 are opened. The cooling air is taken in from exterior first opening 13, introduced into exterior case 10, subjected to heat exchange inside exterior case 10, and discharged from exterior second opening 14. For example, a fan or the like is provided to forcibly allow the cooling air to flow. External first opening 13 and external second opening 14 are preferably provided on different surfaces of exterior case 10 such that the cooling air can be smoothly taken into and discharged from exterior case 10. In the example illustrated in Fig. 2, external first opening 13 is opened on the bottom face of exterior case 10, and external second opening 14 is opened on the upper side of the rear surface of exterior case 10. Note that, in the present disclosure, as illustrated in Figs. 12, 15, 16, and the like, an example in which the cooling air is taken in from external first opening 13 and discharged from external second opening 14 has been described. However, the present disclosure is not limited to this configuration, and it goes without saying that the cooling air may be taken in from the external second opening and discharged from the external first opening.

External first opening 13 and external second opening 14 may be opened in a plurality of slit shapes in addition to being opened in a rectangular shape. As a result, a total opening area can be increased by forming a plurality of slits while narrowing an opening of each slit to suppress entry of a foreign matter. In the examples of Figs. 2, 5, and the like, external first opening 13 is opened in a mesh shape, and external second opening 14 has a slit shape.

External first opening 13 is opened at a position corresponding to holder lower opening portion 35 of battery block 30 housed in exterior case 10. As a result, the cooling air path is exposed from exterior case 10 through external first opening 13 and holder lower opening portion 35 opened in a lower surface of intermediate holder 31C. As a result, cell intermediate region 1c of secondary battery cell 1 housed in intermediate holder 31C can be efficiently cooled by fresh cooling air introduced into exterior case 10 through external first opening 13 and holder lower opening portion 35. In the example illustrated in Fig. 2, the cooling air is introduced into intermediate region 1c of secondary battery cell 1 on a bottom face of intermediate holder 31C from a lower surface by external first opening 13 opened in the bottom face of exterior case 10. As illustrated in Figs. 12 and 15 to 16, the cooling air flows along the cooling air path in battery block 30 while traveling along the cooling air path, and flows to an upper surface of battery block 30 while exchanging heat with secondary battery cell 1. Then, the air is guided to an upper portion of exterior case 10, that is, the inside of upper case 11 in Figs. 12, 15, and 16, through holder upper opening portion 34 opened in the upper surface of intermediate holder 31C and partition opening 21 of partition portion 20, and then discharged through exterior second opening 14 opened above the rear surface of exterior case 10. In this way, the cooling air flows inside exterior case 10 through the cooling air path, and an intermediate portion of secondary battery cell 1 housed in battery block 30 can be directly cooled.

### (End waterproof structure 50)

On the other hand, power supply device 100 includes end waterproof structure 50 that waterproofs an interface between cell intermediate region 1c and end region 1b of each secondary battery cell 1 and prevents a situation where water enters the electrode from the cooling air path. With such a configuration, while the cooling air taken in from the outside flows into intermediate holder 31C to air-cool cell intermediate region 1c of secondary battery cell 1, end region 1b of secondary battery cell 1 is waterproofed to protect the electrode, and an unintended short circuit or the like can be avoided.

In the structure in which cooling air flows into the exterior case and cooling is performed by air cooling, an opening is inevitably provided in the exterior case to secure a flow path of air. On the other hand, in order to prevent the unintended short circuit of the secondary battery cell housed inside the exterior case, a waterproof structure for protecting the battery block housing each secondary battery cell from external water or the like is required. As described above, since it is necessary to waterproof the secondary battery cell housed inside while providing the opening in the exterior case, a complicated structure has been required. On the other hand, in power supply device 100 according to the present exemplary embodiment, as described above, while end waterproof structure 50 ensures the waterproofness of an electrical connection portion of secondary battery cell 1, cell intermediate region 1c of secondary battery cell 1 is exposed to the cooling air path to directly exchange heat. As a result, efficient cooling is achieved.

End waterproof structure 50 can be made of a sealing material, a filling material, an adhesive material, a waterproof double-sided tape, or the like that waterproofs the interface between cell intermediate region 1c and end region 1b of each secondary battery cell 1. In the example illustrated in Fig. 10, end waterproof structure 50 is implemented by interposing a waterproof double-sided tape between intermediate holder 31C and lid holders 31A and 31B. Tape holes 52 into which secondary battery cell 1 can be inserted are opened in the waterproof double-sided tape. Tape hole 52 has substantially the same size as an outer diameter of the cylindrical exterior can of secondary battery cell 1. According to this method, since the waterproof double-sided tape is attached to a wide area of wall portion 31C1 of intermediate holder 31C, reliability of waterproofing can be secured. Moreover, since secondary battery cell 1 is inserted, opening diameters of insertion recesses 32 of lid holders 31A and 31B are slightly larger than the outer diameter of the exterior can of secondary battery cell 1. It is also preferable that tape holes 52 are slightly smaller than opening diameters of insertion recesses 32, and the waterproof double-sided tape is arranged to slightly protrude from a peripheral edge of an opening of insertion recess 32 toward the inside of the opening. As a result, when lid holders 31A and 31B are joined to intermediate holder 31C, the waterproof double-sided tape is bonded to an interface of an outer periphery of the exterior can of secondary battery cell 1 to achieve the waterproof structure.

Moreover, end waterproof structure 50 may be made of an adhesive material. For example, as illustrated in Fig. 11, uncured adhesive material 54 is applied to wall portion 31C1 of intermediate holder 31C in a state where secondary battery cell 1 is inserted into intermediate window portion 31C2 formed in wall portion 31C1 of intermediate holder 31C. Then, lid holder 31A is overlapped and bonded in a state where adhesive material 54 is not cured.

Moreover, with end waterproof structure 50, intermediate holder 31C and lid holders 31A and 31B can be bonded together. As a result, not only the interface between cell intermediate region 1c and end region 1b can be waterproofed to protect the electrode portion of secondary battery cell 1, but also intermediate holder 31C and lid holders 31A and 31B can be simultaneously fixed. As a result, it is possible to reduce the number of steps of adding and fixing a fixing structure such as screwing between intermediate holder 31C and lid holders 31A and 31B. As described above, end waterproof structure 50 is used for both waterproofing of secondary battery cell 1 and fixing of holder case 31, which can also contribute to simplification of power supply device 100.

### [Method for manufacturing power supply device]

Here, an example of a method for manufacturing power supply device 100 including end waterproof structure 50 will be described. First, battery block 30 and exterior case 10 housing battery block 30 are prepared. As described above, battery block 30 is a member for housing the plurality of secondary battery cells 1, and includes intermediate holder 31C and the pair of lid holders 31A and 31B. Intermediate holder 31C holds cell intermediate region 1c between end regions 1b by exposing end regions 1b at a certain distance from cell end faces 1a of secondary battery cells 1 from both sides. Moreover, the pair of lid holders 31A and 31B is arranged on both sides of intermediate holder 31C, respectively, and covers end regions 1b of secondary battery cells 1.

Next, in a state where the plurality of secondary battery cells 1 are held by intermediate holder 31C, end region 1b of each secondary battery cell 1 exposed from intermediate holder 31C is closed by the first surfaces of lid holders 31A and 31B, and intermediate holder 31C and lid holders 31A and 31B are fixed in a state where at least an interface between end region 1b and the intermediate portion is waterproofed by end waterproof structure 50. Intermediate holder 31C and lid holders 31A and 31B can be fixed by filling an uncured adhesive material in an interface between intermediate holder 31C and lid holders 31A and 31B and curing the adhesive material. Alternatively, a waterproof double-sided tape may be attached to the interface between intermediate holder 31C and lid holders 31A and 31B.

Then, battery block 30 is housed in exterior case 10, the cooling air path through which the cooling air flows is formed in cell intermediate region 1c of secondary battery cell 1 on the inner surface of intermediate holder 31C, and the cooling air path communicates with the external opening portion opened in exterior case 10. As a result, while the cooling air flows into intermediate holder 31C to air-cool cell intermediate region 1c of secondary battery cell 1, the terminals are protected by waterproofing end region 1b of secondary battery cell 1, and the unintended short circuit and the like can be avoided.

### (Battery waterproof portion 60)

Further, power supply device 100 includes battery waterproof portion 60 for waterproofing battery block 30 housed in exterior case 10 while providing an opening for allowing the cooling air to flow in exterior case 10. With battery waterproof portion 60, it is possible to avoid a situation where water or the like enters the inside of exterior case 10 through the opening of partition portion 20 provided in exterior case 10 or a gap around the opening.

As a specific configuration of battery waterproof portion 60, first sealing portion 61 is arranged between partition portion 20 and battery module 2 around each partition opening 21 as illustrated in Fig. 4 and the like. As a result, a waterproof structure that waterproofs a portion of battery module 2 other than a portion exposed through partition opening 21 is implemented.

Each first sealing portion 61 is formed in an annular shape slightly larger than partition opening 21. In the example of Fig. 4, first sealing portion 61 provided along each partition opening 21 is formed in an oblong shape. As a result, a waterproof structure that waterproofs a portion of battery module 2 other than a portion exposed through partition opening 21 is implemented.

Moreover, a space between a periphery of partition portion 20 and lower case 12 of exterior case 10 is also waterproofed by second sealing portion 62. As a result, a portion indicated by a broken line in Fig. 3 can be made a waterproof structure, and a portion other than cell intermediate region 1c of secondary battery cell 1 can be waterproofed. Holder upper opening portion 34 of each battery block 30 is exposed from partition opening 21, and second sealing portion 62 prevents water or the like from entering lower case 12 through a gap between a periphery of partition opening 21 and battery block 30.

Further, on the bottom face of power supply device 100, battery waterproof portion 60 is also provided between a bottom face of battery block 30 and external first opening 13 of lower case 12. Specifically, as illustrated in the exploded perspective view of Fig. 5, third sealing portion 63 is arranged around external first opening 13 on an inner surface of lower case 12. Third sealing portion 63 constitutes an opening waterproof structure that is provided between a periphery of external first opening 13 and a periphery of holder lower opening portion 35 of battery block 30 and waterproofs battery block 30. With such a configuration, it is possible to prevent the unintended short circuit of secondary battery cell 1 in battery block 30 by opening external first opening 13 in a part of exterior case 10 and waterproofing external first opening 13 and battery block 30 while performing cooling by introducing the cooling air into exterior case 10.

As first sealing portion 61, second sealing portion 62, and third sealing portion 63, a known member that can exhibit waterproofness can be appropriately used, and for example, a waterproof double-sided tape, a packing, an O-ring, or the like can be used. The same material or structure may be used for first sealing portion 61, second sealing portion 62, and third sealing portion 63, or different materials or structures may be used.

Moreover, according to such a waterproof structure, circuit board 3 can also be waterproofed. That is, circuit board 3 is arranged to be isolated from the cooling air path for flowing the cooling air, which is provided between external first opening 13 and external second opening 14, and thus, circuit board 3 can also be waterproofed by the waterproof structure. In the example illustrated in Figs. 6, 15, and the like, circuit board 3 is arranged between battery block 30 and the inner surface of exterior case 10. As a result, in addition to the short circuit of the terminal of secondary battery cell 1, it is possible to effectively prevent unintended conduction of circuit board 3.

Moreover, in the above configuration, an example in which lead plate 5 is connected to each of the cell end faces on both sides of secondary battery cell 1 to electrically connect with the positive and negative electrodes has been described. However, the present disclosure is not limited to this configuration, and the lead plate may be connected to positive and negative electrodes on one cell end face side. For example, in a configuration in which the positive electrode is provided at the center of one cell end face and the negative electrode is provided therearound, electrical connection with the positive and negative electrodes can be performed only with the cell end face. In this case, it is sufficient to provide the end waterproof structure only on the one cell end face side for waterproofing. In other words, the other cell end face side does not need to be waterproofed.

In the above example, the power supply device is attached to an electric device to be driven and supplies power to the electric device. In a case where remaining capacity of the power supply device becomes small or the power supply device degrades over time, the power supply device can be replaced and the electric device can be continuously used. However, the present invention is not limited to a replaceable power supply device mainly housing a secondary battery cell, and can also be applied to an exemplary embodiment in which a secondary battery cell is housed in a housing of an electric device. In the present disclosure, the power supply device only needs to house a secondary battery cell in a case, and the power supply device also includes one in which a secondary battery cell for driving is incorporated in a housing of an electric device itself. That is, the present invention is not limited to a replaceable power supply device, and can also be applied to an electric device incorporating a secondary battery cell.

### INDUSTRIAL APPLICABILITY

The power supply device and the manufacturing method therefor according to the present disclosure can be suitably used as a power source for driving a power-assisted bicycle, a power source for driving a self-propelled robot for home delivery, an electric cart for home delivery and a golf course, an electric scooter, a construction machine, and a vehicle such as a hybrid vehicle and an electric vehicle. Moreover, the power supply device can also be appropriately used as a power source or the like for portable electric devices such as a wireless device, an electric cleaner, and an electric tool. Moreover, the power supply device can also be applied to a cooling mechanism of an electric device incorporating a heating element without limitation to a power source. Alternatively, the power supply device can also be used for a stationary power storage device, for example, a power supply device for home, business, or factory, a backup power source of a server, or the like.

### REFERENCE MARKS IN THE DRAWINGS

- 100: power supply device
- 1: secondary battery cell
- 1a: cell end face
- 1b: end region
- 1c: cell intermediate region
- 2: battery module
- 3: circuit board
- 4: board holder
- 5: lead plate
- 6: bus bar
- 6B: bus bar positioned at end
- 6C: connection piece
- 10: exterior case
- 11: upper case
- 12: lower case
- 13: external first opening
- 14: external second opening
- 15: external opening portion
- 20: partition portion
- 21: partition opening
- 30: battery block
- 31: holder case
- 31A, 31B: lid holder
- 31C: intermediate holder
- 31C1: wall portion
- 31C2: intermediate window portion
- 31C3: side wall
- 32: insertion recess
- 33: electrode window
- 34: holder upper opening portion
- 35: holder lower opening portion
- 40: insulating sheet
- 41: first insulating sheet
- 42: second insulating sheet
- 43: opening window
- 50: end waterproof structure
- 52: tape hole
- 54: adhesive material
- 60: battery waterproof portion
- 61: first sealing portion
- 62: second sealing portion
- 63: third sealing portion

## Claims

1. A power supply device comprising:
a plurality of secondary battery cells each of which includes a cylindrical exterior can, end faces of the cylindrical exterior can defining cell end faces on which electrodes are provided;
one or more battery blocks that house the plurality of secondary battery cells; and
an exterior case that houses the one or more battery blocks,
wherein each of the one or more battery blocks includes
an intermediate holder that holds a cell intermediate region between end regions of each of the plurality of secondary battery cells, while exposing the end regions from both sides, the end regions each extending a predetermined length from a corresponding one of the cell end faces, and
a pair of lid holders that are respectively disposed on both sides of the intermediate holder and cover the end regions of each of the plurality of secondary battery cells,
a cooling air path through which cooling air flows to the cell intermediate region of each of the plurality of secondary battery cells is defined on an inner surface of the intermediate holder,
the exterior case includes an external opening portion that communicates with the cooling air path, and
the power supply device further comprises end waterproof structures that provide waterproofing around boundaries between the cell intermediate region and the end regions of each of the secondary battery cells.

2. The power supply device according to Claim 1,
wherein each of the pair of lid holders includes insertion recesses on a face facing the intermediate holder, each of the insertion recesses receiving a corresponding end region of a corresponding one of the plurality of secondary battery cells, and
electrode windows are formed in respective bottom faces of the insertion recesses, each of the electrode windows exposing a part of a corresponding one of the cell end faces from a corresponding one of the pair of lid holders.

3. The power supply device according to Claim 2, further comprising:
a lead plate connected to a corresponding one of the electrodes through a corresponding one of the electrode windows.

4. The power supply device according to Claim 3, further comprising:
a circuit board electrically connected to the plurality of secondary battery cells via the lead plate,
wherein the circuit board is provided with a waterproofing structure.

5. The power supply device according to any one of Claims 1 to 4,
wherein the intermediate holder includes
a pair of wall portions that constitute main surfaces of the intermediate holder, and
a pair of side walls each of which connects between the pair of wall portions,
the pair of wall portions define intermediate window portions through which the plurality of secondary battery cells are respectively inserted, and
upper and lower sides of the pair of wall portions are open such that the cell intermediate region of each of the plurality of secondary battery cells is directly exposed in the cooling air path.

6. The power supply device according to any one of Claims 1 to 4, wherein
fixing structures for fixing the lid holders to the intermediate holder constitute the end waterproof structures.

7. The power supply device according to any one of Claims 1 to 4, wherein
each of the end waterproof structures is a waterproof double-sided tape interposed at an interface between the intermediate holder and a corresponding one of the lid holders.

8. The power supply device according to any one of Claims 1 to 4, wherein
each of the end waterproof structures is an adhesive layer that bonds the intermediate holder and a corresponding one of the lid holders.

9. The power supply device according to any one of Claims 1 to 4, wherein
the one or more battery blocks include a pair of battery blocks arranged adjacent to each other.

10. A method for manufacturing a power supply device, the method comprising:
preparing
a plurality of secondary battery cells each of which includes a cylindrical exterior can, end faces of the cylindrical exterior can defining cell end faces on which electrodes are provided,
one or more battery blocks, each including
an intermediate holder that holds a cell intermediate region between end regions of each of the plurality of secondary battery cells, while exposing the end regions from both sides, the end regions each extending a predetermined length from a corresponding one of the cell end faces, and
a pair of lid holders that are respectively disposed on both sides of the intermediate holder and cover the end regions of each of the plurality of secondary battery cells, and
an exterior case that houses the one or more battery blocks;
closing, while holding the plurality of secondary battery cells with the intermediate holder, each of the end regions, exposed from the intermediate holder, of each of the plurality of secondary battery cells with a first surface of a corresponding one of the lid holders, and fixing the intermediate holder and the lid holders in a state where end waterproof structures provide waterproofing at least around boundaries between the cell intermediate region and the end regions; and
housing the one or more battery blocks in the exterior case such that a cooling air path through which cooling air flows to the cell intermediate region of each of the plurality of secondary battery cells is defined on an inner surface of the intermediate holder, and such that the cooling air path communicates with an external opening portion in the exterior case.

11. The method according to Claim 10, further comprising:
filling and curing an uncured adhesive material in each interface between the intermediate holder and the lid holders while fixing the intermediate holder and the lid holders.

12. The method according to Claim 10, further comprising:
attaching a waterproof double-sided tape to each interface between the intermediate holder and the lid holders while fixing the intermediate holder and the lid holders.

13. The power supply device according to any one of Claims 1 to 4,
wherein the intermediate holder includes
a pair of wall portions that constitute main surfaces of the intermediate holder, and
a pair of side walls each of which connects between the pair of wall portions,
the pair of wall portions define intermediate window portions through which the plurality of secondary battery cells are respectively inserted,
a pair of openings surrounded by edges of the pair of wall portions and edges of the pair of side walls are open, and
a cell intermediate region of each of the plurality of secondary battery cells is directly exposed in the cooling air path.
